# EUROPÄISCHE PATENTSCHRIFT

(11) **EP 1 488 132 B1**
(45) Veröffentlichungstag und Bekanntmachung des Hinweises auf die Patenterteilung: **19.04.2006**
(21) Anmeldenummer: 03717236.8
(22) Anmeldetag: 26.03.2003
(51) Int. Cl.: F16F 13/26

(54) **AGGREGATELAGER MIT HYDRAULISCHER DÄMPFUNG**
ASSEMBLY BEARING WITH HYDRAULIC DAMPING
PALIER DE GROUPES A AMORTISSEMENT HYDRAULIQUE

(30) Priorität: 26.03.2002 DE 10213750
(43) Veröffentlichungstag der Anmeldung: 22.12.2004
(73) Patentinhaber: Carl Freudenberg KG, 69469 Weinheim (DE)
(72) Erfinder: FREUDENBERG, Tillmann, 64658 Fürth/Steinbach (DE); MOOG, Erhard, 69517 Gorxheimertal (DE)
(86) Internationale Anmeldenummer: PCT/EP2003/003123
(87) Internationale Veröffentlichungsnummer: WO 2003/081079

(56) Entgegenhaltungen:
- EP-A- 0 297 174
- EP-A- 0 852 304
- DE-A- 3 933 252
- DE-A- 10 121 399
- DE-A- 19 620 219
- US-A- 4 836 515
- US-A- 4 877 225

## Beschreibung

### Technisches Gebiet

Die Erfindung betrifft ein Aggregatelager mit hydraulischer Dämpfung, insbesondere zur Lagerung von Motoren und/oder Getrieben in Kraftfahrzeugen, mit einer Arbeitskammer und einer Ausgleichskamrner, die jeweils teilweise elastisch verformbare Wandungen aufweisen und durch eine Trennwand voneinander getrennt, jedoch über einen Dämpfungskanal flüssigkeitsleitend miteinander verbunden sind, sowie mit einer weiteren Durchtrittsöffnung, die von außen variabel einstellbar ist, wobei die Trennwand (50) eine Entkopplungseinrichtung zur Isolierung hochfrequenter, kleinamplitudiger Schwingungen umfasst, und die weitere Durchtrittsöffnung (14) der Entkopplungseinrichtung vor- oder nachgeschaltet ist.

### Stand der Technik

Hydraulisch gedämpfte Aggregatelager sind allgemein bekannt und in der Literatur vielfach beschrieben. Ein Aggregatelager der eingangs genannten Art ist aus der DE 39 33 252 C2 bekannt. Das bekannte Aggregatelager weist im Wesentlichen eine Hydraulikkammer auf, die von einer Trennwand in eine Arbeits- und eine Ausgleichskammer unterteilt ist. In der Trennwand befindet sich ein Dämpfungskanal, der beide Kammern flüssigkeitsleitend miteinander verbindet. Die Arbeitskammer ist nach oben hin durch einen im Wesentlichen kegelstumpfförmigen Federkörper aus gummielastischem Material mit einem einvulkanisierten Anschlussstück mit Befestigungsmitteln begrenzt. Die Ausgleichskammer wird nach unten hin durch eine drucklos Volumen aufnehmende Ausgleichsmembran abgeschlossen, die von einem ebenfalls mit Befestigungsmitteln versehenen Lagerdeckel überdeckt ist Weiterhin ist in der Ausgleichskammer ein Überströmspalt vorgesehen, dessen Öffnungsquerschnitt von außen variabel einstellbar ist. Der Öffnungsspalt wird durch eine axial verschiebbare, konisch gestaltete, mit Durchbrüchen versehene Absenkungsscheibe in der Ausgleichskammer und eine entsprechend konisch geformte Gegenfläche, die an ein Zwischenstück angeformt ist, gebildet. Durch diese Maßnahme soll ein in seiner Frequenzlage veränderbarer Tilgereffekt erzielt werden, der dazu eingesetzt werden soll, eine frequenzabhängig regelbare akustische Absenkung zu erzielen.

Nachteilig an dem bekannten Aggregatelager ist, dass sich bedingt durch die Trägheit der Flüssigkeitssäule in dem Dämpfungskanal gegenüber den höher-und hochfrequenten kleinamplitudigen Anregungen diese Schwingungen nicht auf die Ausgleichskammer übertragen. Der gewünschte Tilgereffekt kommt dadurch überhaupt nicht oder aber nur unzureichend zustande.

Aus der gattungsbilden DE 196 20 219 A1 ist eine hydraulisch gedämpfte Lagereinrichtung bekannt mit einer elastischen Wand, die zwei Verankerungsteile verbindet Eine starre Trennwand, die an einem der Verankerungsteile befestigt ist, begrenzt zusammen mit der elastischen Wand eine Arbeitskammer für ein Hydraulikfluid. Die Arbeitskammer steht über einen Durchlaß mit einer Ausgleichskammer in Verbindung, wobei die Ausgleichskammer von einer flexiblen Wand begrenzt ist. Die Trennwand stützt eine Membran ab, die als Abgrenzung zwischen dem Fluid in der Arbeitskammer und einer Gastasche wirkt. Eine Anschlagplatte erstreckt sich über der Membran in der Arbeitskammer, wobei die Anschlagplatte Öffnungen aufweist, die eine Flüssigkeitsverbindung durch die Anlschlagplatte hindurch zwischen der Arbeitskammer und der Membran ermöglichen. Gemäß der vorliegenden Erfindung ist das Verhältnis zwischen der wirksamen Gesamtquerschnittsfläche und der wirksamen Gesamtlänge der Öffnungen veränderlich. Dies kann mit einer beweglichen Platte erreicht werden, die mit Löchern versehen ist, wobei die Löcher mit den Öffnungen zur Deckung brinbar sind, und die bewegbar ist, um den Deckungsgrad zu verändern, um dadurch die Öffnungen ganz oder teilweise zu blockieren und ihre wirksame Querschnittsfläche zu verändern.

Nachteilig an dieser Lagereinrichtung ist, dass der durch eine verdrehbare Düsenscheibe erzielbare Tilgereffekt noch unzureichend ist.

### Darstellung der Erfindung

Aufgabe der Erfindung ist, ein Aggregatelager der gattungsgemäßen Art so weiterzubilden, dass es insbesondere höherfrequente und hochfrequente Schwingungen mit kleinen Amplituden mit hohem Wirkungsgrad zu entkoppeln bzw. zu dämpfen vermag, so wie sie insbesondere von höher drehenden und schneller fahrenden Fahrzeugen am Antriebsaggregat erzeugt werden. Darüber hinaus soll mit möglichst einfachen, konstruktiven Zusatzmaßnahmen auch eine Leerlaufschaltung möglich sein. Diese Aufgabe wird gelöst mit einem Aggregatelager mit hydraulischer Dämpfung mit allen Merkmalen des Patentanspruchs 1. Vorteilhafte Ausgestaltungen der Erfindung sind in den Unteransprüchen beschrieben.

Erfindungsgemäß umfasst bei einem Aggregatelager mit hydraulischer Dämpfung, insbesondere zur Lagerung von Motoren und/oder Getrieben in Kraftfahrzeugen, mit einer Arbeitskammer und einer Ausgleichskammer, die jeweils teilweise elastisch verformbare Wandungen aufweisen und durch eine Trennwand voneinander getrennt, jedoch über einen Dämpfungskanal flüssigkeitsleitend miteinander verbunden sind, sowie mit einer weiteren Durchtrittsöffnung, die von außen variabel einstellbar ist, die Trennwand eine Entkopplungseinrichtung zur Isolierung hochfrequenter, kleinamplitudiger Schwingungen. Dieser Entkopplungseinrichtung ist erfindungsgemäß der weiteren Durchtrittsöffnung vor- oder nachgeschaltet. Erfindungsgemäß wird die Durchschnittsöffnung durch eine in der Arbeitskammer angeordnete peripher umlaufende Konusfläche und eine in Korrespondenz mit dieser Konusfläche in der Arbeitskammer höhenverstellbar angeordnete Absenkungsscheibe erzeugt.

Die Federeigenschaften des erfindungsgemäßen Aggregatelagers mit hydraulischer Dämpfung werden wie bei den konventionellen entkoppelten Hydrolagern durch die vier Hauptkomponenten Tragfeder, Blähfeder, Tilgerkanal und Entkopplungseinrichtung für akustische Schwingungen bestimmt Damit vereinigt das erfindungsgemäße Aggregatelager in sich alle Vorteile eines konventionellen entkoppelten Hydrolagers, wie z.B.:
1. Entkopplung von Vibrationen: die Tragfeder ist weich, die Entkopplungswirkung ist im gesamten Frequenzbereich sehr gut
2. Tilgung der Stuckerbewegung: im Falle sehr großer Amplituden (Stucker bewegung des Aggregates) muss das Lager in dieser Frequenz sehr steif werden. Dazu wird die Blähfeder parallel zur Tragfeder geschaltet. Dies geschieht beim Hydrolager durch die Wirkung der Fluidmasse im Dämpfungskanal, die so abgestimmt ist, dass sie der Anregung wie ein Tilger entgegenschwingt.
3. Entkopplung der Akustik: Bei hohen Frequenzen (kleine Amplituden, Körperschall) wirkt die Entkopplungseinrichtung. Diese nimmt die kleinamplitudigen, hochfrequenten Schwingungen auf und isoliert sie von dem Fahrgestell.

Darüber hinaus besitzt das erfindungsgemäße Aggregatelager durch die weitere Durchgangsöffnung eine zusätzliche Tilgerfunktion, die sowohl flexibel anpassbar, als auch aktiv steuerbar ist. Im Gegensatz zu den bekannten aktiv steuerbaren Hydrolagern zeichnet sich das erfindungsgemäße Aggregatelager aber durch einen wesentlich einfacheren Aufbau und damit geringeren Fertigungsaufwand aus.

In einer bevorzugten Ausführung der Erfindung befindet sich die weitere Durchtrittsöffnung in der Arbeitskammer und ist damit der Entkopplungseinrichtung vorgeschaltet. Vorteil dieser Anordnung ist, dass die mit der Durchtrittsöffnung einhergehende Trägheitswirkung der Flüssigkeit der Nachgiebigkeit der Blähfeder direkt räumlich zugeordnet ist und sich dadurch eine bessere Tilgerwirkung erzielen lässt.

In einer weiteren vorteilhaften Ausführungsform der Erfindung umfasst die Entkopplungseinrichtung eine an sich bekannte Lose. Anordnungen mit einer Lose sind an sich bekannt. Hierbei wird, in der Regel in einen sogenannten Losenkäfig, eine Membran eingelegt, die rundum und ganz besonders in axialer Richtung des Lagers ein Spiel hat Dieses ist so bemessen, dass bei einer definierten Amplitude, häufig z.B.± 0,2 mm, der Freiweg zwischen oberem und unterem Gitter des Losenkäfigs aufgebraucht wird. Sind die Amplituden nun kleiner als ± 0,2 mm, wie es bei den erwähnten hochfrequenten, kleinamplitudigen, akustischen Schwingungen der Fall ist, bewegt sich die Membrane mit der Flüssigkeit idealerweise so, dass kein Druck in der Kammer entsteht. Daher wird keine Kraft übertragen und es entsteht auch keine Dämpfung. Die Schwingungen sind vom Fahrgestell isoliert. Die vorliegende Erfindung ist jedoch keineswegs auf die beschriebene Entkopplungseinrichtung beschränkt. Ebenso denkbar ist beispielsweise die Verwendung einer an sich bekannten, Membran.

Es hat sich als vorteilhaft erwiesen, die Durchtrittsöffnung während des Betriebs des Aggregats in Abhängigkeit von wenigstens einer vom Aggregat vorgegebenen Führungsgröße variabel einzustellen, insbesondere mittels einer dafür vorgesehenen Steuereinrichtung zu steuern. Als Führungsgröße kommt prinzipiell die Frequenz einer jeden harmonischen Anregung in Frage.

Es hat sich jedoch als vorteilhaft herausgestellt, als Führungsgröße die dominante Motorordnung, das heißt für Vierzylinderreihenmotoren die zweite Motorordnung, zu wählen. Damit lässt sich das im wesentlichen auf die dominante Motorordnung zurückzuführende Fahrzeugbrummen erheblich reduzieren. Prinzipiell können aber auch andere Ordnungen, die sich störend auf die Fahrzeugakustik auswirken, ausgewählt werden. So kann es zum Beispiel vorkommen, dass bei festen Frequenzen Teile des Fahrzeugs in Resonanz geraten, so dass es auch vorteilhaft sein kann, die Tilgerfrequenz der Anordnung nur diskret auf diese Frequenzen einzustellen.

Gemäß der Erfindung wird die Durchtrittsöffnung durch eine in der Arbeitskammer angeordnete, peripher umlaufende Konusfläche und eine in Korrespondenz mit dieser Konusfläche in der Arbeitskammer höhenverstellbar angeordnete Absenkungsscheibe erzeugt. Durch diese konstruktive Ausgestaltung ist nur ein geringer Fertigungsaufwand erforderlich.

Hierbei ist der äuBere Rand der Absenkungsscheibe vorteilhafterweise von der Entkopplungseinrichtung weggebördelt und bildet so die Wandung eines kurzen Kanals.

Die peripher umlaufende Konusfläche ist vorteilhafterweise an einen auf der Trennwand angeordneten Ring angeformt, da sich bei dieser Anordnung der Dämpfungskanal in die Trennwand integrieren lässt, was zu einer kostengünstigeren Lösung führt.

Der Einfachheit halber wird die Absenkungsscheibe von einer im Wesentlichen zentrisch im Lager angeordneten, axial beweglichen Schaltstange getragen, die durch entsprechende zentrische Öffnungen geführt von unten her durch die Ausgleichskammer hindurch bis in die Arbeitskammer hineinragt. Hierber handelt es sich ebenfalls um eine relativ einfache konstruktive Maßnahme, mit deren Hilfe sich die variable Einstellung des Öffnungsquerschnitts in einfacher Weise erzielen lässt.

Vorteilhafterweise ist eine Einrichtung zum axialen Verschieben der Schaltstange vorgesehen. Diese Einrichtung kann z.B. ein Elektroschrittmotor sein.

Ist eine aktive Steuerung der Durchtrittsöffnung vorgesehen, wird der Elektromotor mittels einer Steuereinrichtung betätigt

Weiterhin ist es vorteilhaft, die Absenkungsscheibe mit einer weiteren Durchtrittsöffnung zu versehen. Durch diese Maßnahme wird die Dämpfung im niederfrequenten Bereich herabgesetzt und der Tilgereffekt bildet sich besser aus.

In einer weiteren vorteilhaften Ausgestaltung der Erfindung ist eine Leerlaufschaltung vorgesehen.

Die Leerlaufschaltung besteht erfindungsgemäß darin, dass im Leerlauf die Durchtrittsöffnung auf den kleinsten Öffnungsquerschnitt abgesenkt wird. Weiterhin weist die Entkopplungseinrichtung eine Lose mit im Fahrbetrieb begrenztem Losenspiel auf, wobei in der Leerlaufschaltung das Losenspiel freigegeben wird. In dieser Stellung kann die Flüssigkeitssäule unbegrenzt vom Losenspiel gegen die Blähfeder schwingen. Der Tilgereffekt wird auf die Leerlaufdrehzahl eingestellt. In dieser Ausführungsform verbindet das erfindungsgemäße Aggregatelager in sich alle Vorteile eines Leerlaufschaltlagers mit denen eines aktiv steuerbaren Motorlagers.

Die Leerlaufschaltung lässt sich konstruktiv einfach dadurch realisieren, dass die Schaltstange ein Betätigungselement aufweist, mittels dessen beim Herunterfahren der Absenkungsscheibe zum Einstellen des kleinsten Öffnungsquerschnitts die untere das Losenspiel begrenzende Wandung des Losenkäfigs z. B. gegen die Kraft einer Feder, z. B. einer Tellerfeder, mit nach unten bewegbar ist.

Weist die Absenkungsscheibe zur Herabsetzung der Dämpfung im niederfrequenten Bereich eine weitere Durchtrittsöffnung auf, dann kann die Absenkungsscheibe im Leerlauf ohne Beeinträchtigung des Verlaufs der dynamischen Steifigkeit gegen die Konusfläche auf Anschlag gefahren werden. Dies vereinfacht die Ansteuerung des Verstellmotors der Absenkungsscheibe.

Das erfindungsgemäße Aggregatelager weist eine hohe Entkopplungsgüte in der gewählten, z. B. der dominanten, Ordnung im gesamten Drehzahlbereich auf.

Des weiteren lässt sich mit dem erfindungsgemäßen Aggregatelager, wie oben beschrieben, eine wirksame Leerlaufentkopplung erzielen. Fertigungstechnische Vorteile entstehen daraus, dass der Aufbau des erfindungsgemäßen Aggregatelagers sehr einfach ist, dass nur geringe Stellenergien erforderlich sind, da keine schnellen Stellvorgänge benötigt werden und dass kein zusätzlicher Bauraum benötigt wird. Geeignet ist das erfindungsgemäße Aggregatelager insbesondere für alle Aggregate mit ausgeprägter dominanter Anregung, wie z.B. alle Vierzylinderreihenmotore, hauptsächlich Dieselmotore.

### Kurzbeschreibung der Zeichnung

Nachfolgend wird die Erfindung anhand der Zeichnungen näher erläutert.

Es zeigen:
- Figur 1: in schematischer Darstellung ein Vertikalschnitt durch ein erfindungsgemäßes Aggregatelager in einer bevorzugten Ausführungsform;
- Figur 2 a, b: ein Vertikalschnitt durch ein erfindungsgemäBes Aggregatelager mit Leerlaufschaltung;
- Figur 3: den qualitativen Verlauf der Lagersteifigkeit in Abhängigkeit von der Frequenz für ein erfindungsgemäBes Aggregatetager mit hydraulischer Dämpfung.

### Ausführung der Erfindung

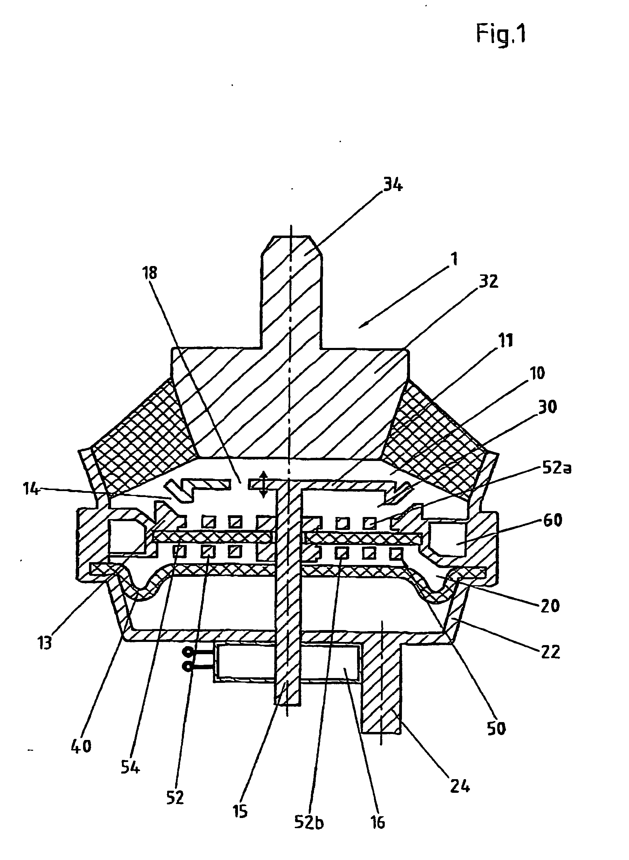

Figur 1 zeigt einen Vertikalschnitt durch ein erfindungsgemäßes hydraulisch gedämpftes Motorlager 1, das eine Arbeitskammer 10 und eine Ausgleichskammer 20 ausweist, welche mit einem üblichen hydraulischen Fluid gefüllt sind. Die Arbeitskammer 10 wird durch eine kegelstumpfförmige Wandung 30 aus gummielastischem Material, die sogenannten Tragfeder, begrenzt. Die Ausgleichskammer 20 wird durch eine tassenförmige Wandung 40, die ebenfalls aus gummielastischem Material besteht, z.B. ein drucklos Volumen aufnehmender Rollbalg, nach unten hin begrenzt. An der Umfangswand 30 wird die motorseitige Lagerplatte 32 aufgenommen, die zur Festlegung am Motor mit einem abragenden Schraubbolzen 34 versehen ist. Zwischen der Arbeitskammer 10 und der Ausgleichskammer 20 ist eine Trennwand 50 angeordnet, in der ein Losenkäfig 52 zur Aufnahme einer Lose 54 vorgesehen ist. In der Trennwand 50 ist weiterhin ein Dämpfungskanal 60 eingebracht, welcher die beiden flüssigkeitsbefüllten Kammern 10 und 20 hydraulisch miteinander verbindet. Die untere Begrenzungswand 40 der Ausgleichskammer 20 ist von einem Gehäuse 22 umgeben, an dem ein senkrecht abragender Schraubbolzen 24 zur karosserieseitigen Festiegung des Aggregatelagers vorgesehen ist.

In der gezeigten Ausführungsform umfasst der Losenkäfig 52 einen oberen Deckelteil 52 a und einen unteren Bodenteil 52 b. Die Lose 54 ist in dem Losenkäfig 52 in Axialrichtung beweglich angeordnet. Der Losenkäfig 52 weist beabstandete Stege auf, zwischen denen Öffnungen in dem oberen Deckelteil 52 a bzw. unterem Bodenteil 52 b ausgebildet sind. Die Öffnungen ermöglichen eine Einwirkung des Fluids auf die Lose 54. Die Lose 54 ist in an sich bekannter Weise aus einem gummielastischen Material hergestellt.

Man erkennt weiterhin in der Arbeitskammer 10 die weitere Durchtrittsöffnung 14, die durch die Absenkungsscheibe 11 und eine zu dieser korrespondierenden, peripher umlaufenden konischen Fläche 13 gebildet wird. Die Absenkungsscheibe 11 wird durch die axial bewegliche Schaltstange 15 getragen. Die Schaltstange 15 ist in der gezeigten Ausführungsform ohne Beschränkung der Allgemeinheit mittels eines Elektromotors in axialer Richtung zwischen einer Öffnungs- und einer Schließposition verschiebbar.

Im Leerlauf ist die Durchtrittsöffnung 14 geschlossen, die Absenkungsscheibebefindet sich in ihrer unteren Schließposition. Hierbei bildet die umlaufende Konusfläche 13 einen Anschlag für den von der Entkopplungseinrichtung 54 weggebördelten Rand der Absenkungsscheibe 11. Im Fahrbetrieb die Absenkungsscheibe durch den vorgegebenen Frequenzverlauf geführt mit Hilfe des Motors 16 kontinuierlich nach oben verschoben. Hierdurch wird der Öffnungsquerschnitt der Durchtrittsöffnung 14 kontinuierlich vergrößert. Die Durchtrittsöffnung 14 wirkt dadurch als weiterer Tilger, wobei der Tilgerpunkt dem vorgegebenen Frequenzverlauf folgend von außen gesteuert wird. Dies zeigt sich in einer Absenkung der dynamischen Steifigkeit des Lagers 1, die mit der relevanten Frequenz mitgeführt wird. Man erkennt weiterhin in der Figur die Öffnung 18 in der Absenkungsscheibe 11, die der Absenkung der Dämpfung im niederfrequenten Bereich dient.

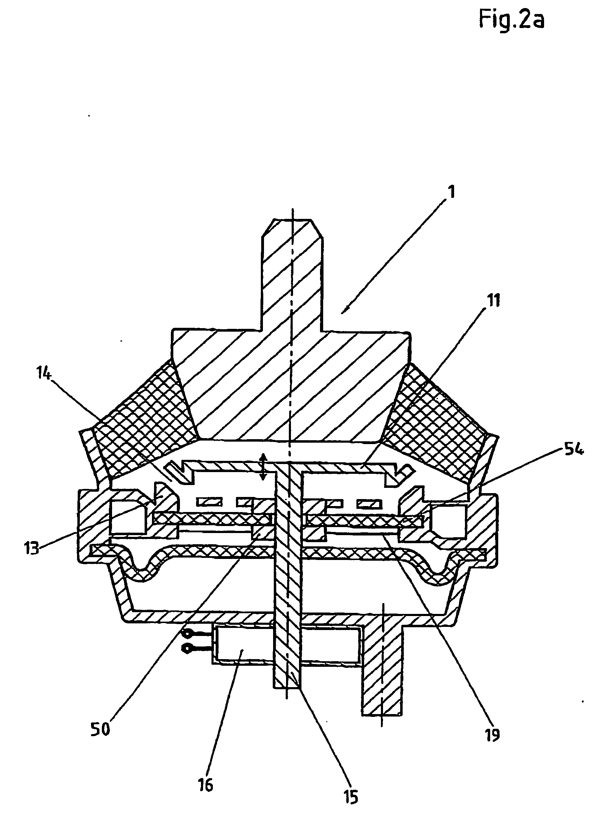

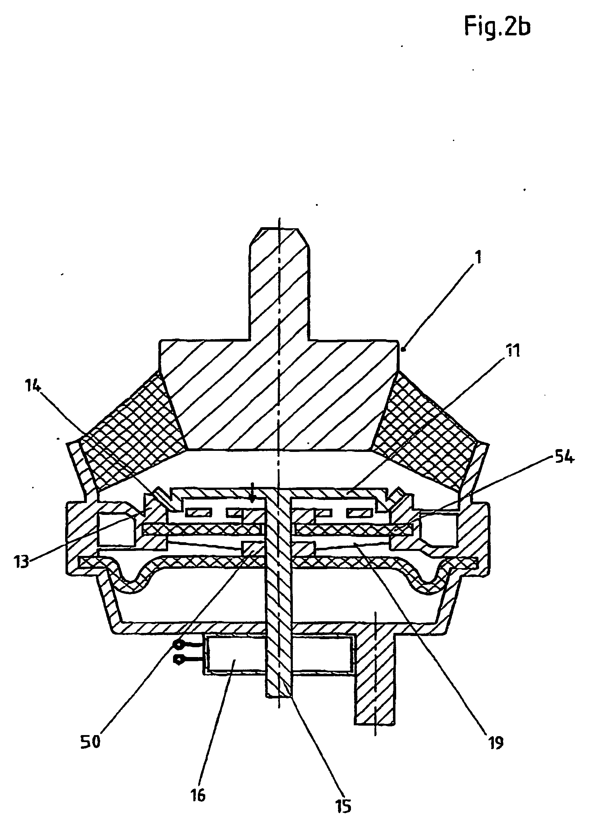

In den Figuren 2 a und b ist in einer Prinzipskizze die Funktionsweise der erfindungsgemäben Leerlautschaltung für das Aggregatelager 1 aus Figur 1 dargestellt Zur besseren Übersichtlichkeit sind die für die Funktionsweise der Leerlaufschaltung nicht relevanten Lagerkomponenten nicht mit Bezugszeichen versehen. Figur 2 a zeigt das erfindungsgemäße Aggregatelager 1 im Fahrbetrieb mit geöffneter Durchtrittsöffnung 14.

Figur 2 b verdeutlicht die Funktionsweise der Leerlaufschaltung. Man erkennt in Figur 2 b, dass die untere Begrenzungswand 52b des Losenkäfigs 52 mit der Schaltstange 15 derart verbunden ist, dass beim Schließen der Durchtrittsöffnung 14 durch Herunterbewegung der Schaltstange 15 mit der Absenkungsscheibe 11 der Boden des Losenkäfigs 52 mit nach unten verschiebbar ist. Dies geschieht in der dargestellten Ausführungsform gegen die Kraft einer Tellerfeder 19. Die Absenkungsscheibe 11 wird so weit nach unten gefahren, bis ihr weggebördette Rand an der konische Fläche 13 zur Anlage kommt, d. h. die Durchtrittsöffnung 14 verschlossen ist Durch das Herunterbewegen des Bodens 52 b des Losenkäfigs 52 wird das Losenspiel freigegeben. Das Aggregatelager 1 befindet sich in der Leerlaufschaltung.

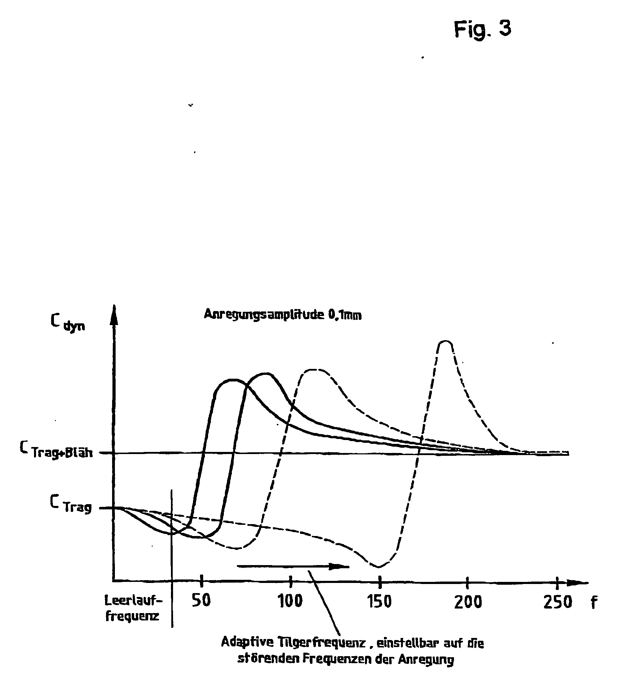

In Figur 3 ist der Verlauf der dynamischen Steifigkeit eines erfindungsgemäßen Aggregatelagers über der Frequenz für verschiedene Öffnungsquerschnitte der weiteren Durchtrittsöffnung, beispielsweise realisiert durch verschiedene Stellungen der Absenkungsscheibe, qualitativ dargestellt. Mit zunehmendem Öffnungsquerschnitt verschiebt sich die Dämpfungskurve zu höheren Frequenzen hin. Man erkennt weiterhin, dass wegen des Tilgereffekts die dynamische Steifigkeit unter die Tragfederrate abgesenkt wird. Dieser Effekt ist um so ausgeprägter, je höher die Frequenz ist, da bei großen Öffnungsquerschnitten die Bedämpfung der Tügerresonanz abnimmt. Die Absenkung lässt sich über einen weiten, fahrzeugakustisch bedeutenden Frequenzbereich erzielen. Die dargestellten Kurvenverläufe stellen sich für kleine Amplituden ein, wenn auch die Entkopplungseinrichtung wirksam ist. Daher ist in Figur 3 auch die Wirkung des Dämfungskanals nicht zu sehen.

## Patentansprüche

1. Aggregatelager mit hydraulischer Dämpfung, insbesondere zur Lagerung von Motoren und/oder Getrieben in Kraftfahrzeugen, mit einer Arbeitskammer (10) und einer Ausgleichskammer (20), die jeweils teilweise elastisch verformbare Wandungen (30, 40) aufweisen und durch eine Trennwand (50) voneinander getrennt, jedoch über einen Dämpfungskanal (60) flüssigkeitsleitend miteinander verbunden sind, sowie mit einer weiteren Durchtrittsöffnung (14), die von außen variabel einstellbar ist, wobei die Trennwand (50) eine Entkopplungseinrichtung zur Isolierung hochfrequenter, kleinamplitudiger Schwingungen umfasst und dass die weitere Durchtrittsöffnung (14) der Entkopplungseinrichtung vor- oder nachgeschaltet ist, **dadurch gekennzeichnet, dass** die Durchtrittsöffnung (14) durch eine in der Arbeitskammer (10) angeordnete peripher umlaufende Konusfläche (13) und eine in Korrespondenz mit dieser Konufläche (13) in der Arbeitskammer (10) höhenverstellbar angeordnete Absenkungsscheibe (11) erzeugt wird.

2. Aggregatelager nach Anspruch 1, **dadurch gekennzeichnet, dass** die Durchtrittsöffnung (14) der Entkopplungseinrichtung vorgeschaltet ist.

3. Aggregatelager nach Anspruch 1 oder 2, **dadurch gekennzeichnet, dass** die Entkopplungseinrichtung eine Lose (54) umfasst.

4. Aggregatelager nach einem der Ansprüche 1 bis 3, **dadurch gekennzeichnet, dass** die Durchtrittsöffnung (14) während des Betriebs des Aggregats in Abhängigkeit von wenigstens einer vom Aggregat vorgegebenen Führungsgröße variabel einstellbar ist.

5. Aggregatelager nach Anspruch 4, **dadurch gekennzeichnet, dass** eine Steuereinrichtung zum Einstellen der Durchtrittsöffnung (14) vorgesehen ist.

6. Aggregatelager nach Anspruch 4 oder 5, **dadurch gekennzeichnet, dass** als Führungsgröße die dominante Motorordnung gewählt ist.

7. Aggregatelager nach einem der Ansprüche 4 bis 6, **dadurch gekennzeichnet, dass** als Führungsgröße die zweite Motorordnung gewählt ist.

8. Aggregatelager nach Anspruch 1, **dadurch gekennzeichnet, dass** der äußere Rand der Absenkungsscheibe (11) von der Entkopplungseinrichtung weggebördelt ist.

9. Aggregatelager nach Anspruch 1 oder 7, **dadurch gekennzeichnet, dass** die peripher umlaufende Konusfläche (13) an einen auf der Trennwand (50) angeordneten Ring angeformt ist.

10. Aggregatelager nach Anspruch 8 oder 9, **dadurch gekennzeichnet, dass** die Absenkungsscheibe (11) von einer im Wesentlichen zentrisch im Lager (1) angeordneten axial beweglichen Schaltstange (15) getragen wird, die durch entsprechende zentrische Öffnungen geführt von unten her durch die Ausgleichskammer (20) hindurch bis in die Arbeitskammer (10) hineinragt.

11. Aggregatelager nach Anspruch 10, **dadurch gekennzeichnet, dass** eine Einrichtung zum axialen Verschieben der Schaltstange (15) vorgesehen ist.

12. Aggregatelager nach Anspruch 11, **dadurch gekennzeichnet, dass** die Einrichtung ein Elektromotor (16) ist.

13. Aggregatelager nach Anspruch 12, **dadurch gekennzeichnet, dass** der Elektromotor (16) mittels der Steuereinrichtung betätigbar ist

14. Aggregatelager nach einem der Ansprüche 8 bis 13, **dadurch gekennzeichnet, dass** die Absenkungsscheibe (11) mit einer Öffnung (18) zum Herabsetzen der Dämpfung versehen ist.

15. Aggregatelager nach einem der Ansprüche 1 bis 14, **dadurch gekennzeichnet, dass** eine Leerlaufschaltung vorgesehen ist.

16. Aggregatelager nach Anspruch 15, **dadurch gekennzeichnet, dass** in der Leerlaufschaltung die Durchtrittsöffnung (14) geschlossen ist und dass die Entkopplungseinrichtung eine Lose (54) mit begrenztem Losenspiel aufweist, wobei in der Leerlaufschaltung das Losenspiel freigegeben ist.

17. Aggregatelager nach Anspruch 16, **dadurch gekennzeichnet, dass** zur Freigabe des Losungspiels die untere Begrenzung des Losenspiels absenkbar ist.

18. Aggregatelager nach Anspruch 17, **dadurch gekennzeichnet, dass** die Schaltstange (15) ein Betätigungselement aufweist, mittels dessen bei Herunterfahren der Absenkungsscheibe (11) die untere Begrenzung des Losenspiels gegen eine Federkraft nach unten bewegbar ist.

19. Aggregatelager nach Anspruch 18, **dadurch gekennzeichnet, dass** der Boden (52b) des Losenkäfigs (52) mittels der Absenkungsscheibe (11) nach unten bewegbar ist.

## Claims

1. Assembly mounting with hydraulic damping, in particular for mounting engines and/or transmissions in motor vehicles, having a work chamber (10) and an equalizing chamber (20), which each have partially elastically deformable walls (30, 40) and are separated from one another by a separating wall (50), but are connected to one another in a fluid conducting manner by means of a damping duct (60) and also having an additional throughflow opening (14) which can be variably adjusted by an external source, the separating wall (50) comprising a decoupling device for isolating high-frequency, low-amplitude vibrations, and in that the additional throughflow opening (14) is arranged upstream or downstream of the decoupling device, **characterized in that** the throughflow opening (14) is generated by a peripherally continuous conical face (13) arranged in the work chamber (10) and a lowering disc (11) which is arranged in correspondence with said conical face (13) in the work chamber (10) in a manner displaceable in height.

2. Assembly mounting according to Claim 1, **characterized in that** the throughflow opening (14) is arranged upstream of the decoupling device.

3. Assembly mounting according to Claim 1 or 2, **characterized in that** the decoupling device comprises a loose component (54).

4. Assembly mounting according to one of Claims 1 to 3, **characterized in that** during operation of the assembly, the throughflow opening (14) is variably adjustable as a function of at least one reference variable which is predefined by the assembly.

5. Assembly mounting according to Claim 4, **characterized in that** a control device is provided for adjusting the throughflow opening (14).

6. Assembly mounting according to Claim 4 or 5, **characterized in that** the dominant engine order is selected as a reference variable.

7. Assembly mounting according to one of Claims 4 to 6, **characterized in that** the second engine order is selected as a reference variable.

8. Assembly mounting according to Claim 1, **characterized in that** the outer edge of the lowering disc (11) is bent away from the decoupling device.

9. Assembly mounting according to Claim 1 or 7, **characterized in that** the peripherally continuous conical face (13) is integrally formed on a ring which is arranged on the separating wall (50).

10. Assembly mounting according to Claim 8 or 9, **characterized in that** the lowering disc (11) is carried by a selector rod (15) which is arranged substantially centrally in the mounting (1) and is axially moveable and projects, from below, through the equalizing chamber (20) into the work chamber (10), with guidance from corresponding central openings.

11. Assembly mounting according to Claim 10, **characterized in that** a device is provided for axially displacing the selector rod (15).

12. Assembly mounting according to Claim 11, **characterized in that** the device is an electric motor (16).

13. Assembly mounting according to Claim 12, **characterized in that** the electric motor (16) can be actuated by means of the control unit.

14. Assembly mounting according to one of Claims 8 to 13, **characterized in that** the lowering disc (11) is provided with an opening (18) to reduce damping.

15. Assembly mounting according to one of Claims 1 to 14, **characterized in that** an idle circuit is provided.

16. Assembly mounting according to Claim 15, **characterized in that** in the idle circuit, the throughflow opening (14) is closed, and **in that** the decoupling device has a loose component (54) with delimited loose play, the loose play being enabled in the idle circuit.

17. Assembly mounting according to Claim 16, **characterized in that** to enable the loose play, the lower delimitation of the loose play can be lowered.

18. Assembly mounting according to Claim 17, **characterized in that** the selector rod (15) has an actuating element, by means of which the lower delimitation of the loose play can be moved downwards, counter to a spring force, when the lowering disc (11) is lowered.

19. Assembly mounting according to Claim 18, **characterized in that** the base (52b) of the loose component cage (52) can be moved downwards by means of the lowering disc (11).

## Revendications

1. Palier de groupe à amortissement hydraulique, notamment pour le montage de moteurs et/ou de transmissions dans des véhicules automobiles, avec une chambre de travail (10) et une chambre de compensation (20), qui présentent respectivement des parois (30, 40) partiellement élastiquement déformables et qui sont séparées l'une de l'autre par une paroi séparatrice (50), mais sont mutuellement reliées en conduction de liquide via un canal d'amortissement (60), ainsi qu'avec une ouverture de passage supplémentaire (14) qui peut être réglée de manière variable de l'extérieur, sachant que la paroi séparatrice (50) comprend un dispositif de découplage pour isoler les vibrations de haute fréquence et de faible amplitude et que l'ouverture de passage supplémentaire (14) est montée en amont ou en aval du dispositif de découplage, **caractérisé en ce que** l'ouverture de passage (14) est produite par une surface conique (13) périphériquement entourante disposée dans la chambre de travail (10) et par un plateau descendeur (11) disposé, avec possibilité de réglage en hauteur, en correspondance avec cette surface conique (13) dans la chambre de travail (10).

2. Palier de groupe selon la revendication 1, **caractérisé en ce que** l'ouverture de passage (14) est montée en amont du dispositif de découplage.

3. Palier de groupe selon la revendication 1 ou 2, **caractérisé en ce que** le dispositif de découplage comprend une membrane (54).

4. Palier de groupe selon l'une quelconque des revendications 1 à 3, **caractérisé en ce que** l'ouverture de passage (14) peut, pendant le fonctionnement du groupe, être réglée de manière variable en fonction d'au moins une variable de guidage prescrite par le groupe.

5. Palier de groupe selon la revendication 4, **caractérisé en ce qu'**il est prévu un dispositif de commande pour régler l'ouverture de passage (14).

6. Palier de groupe selon la revendication 4 ou 5, **caractérisé en ce qu'**on choisit comme variable de guidage l'ordre dominant du moteur.

7. Palier de groupe selon l'une quelconque des revendications 4 à 6, **caractérisé en ce qu'**on choisit comme variable de guidage le deuxième ordre du moteur.

8. Palier de groupe selon la revendication 1, **caractérisé en ce que** le bord extérieur du plateau descendeur (11) est rabattu en éloignement du dispositif de découplage.

9. Palier de groupe selon la revendication 1 ou 7, **caractérisé en ce que** la surface conique (13) périphériquement entourante est formée sur une bague disposée sur la paroi séparatrice (50).

10. Palier de groupe selon la revendication 8 ou 9, **caractérisé en ce que** le plateau descendeur (11) est porté par une tringle de manoeuvre (15) axialement mobile disposée sensiblement centralement dans le palier (1), laquelle, en étant guidée dans des ouvertures centrées correspondantes, pénètre par le dessous jusque dans la chambre de travail (10) en traversant la chambre de compensation (20).

11. Palier de groupe selon la revendication 10, **caractérisé en ce qu'**il est prévu un dispositif pour le déplacement axial de la tringle de manoeuvre (15).

12. Palier de groupe selon la revendication 11, **caractérisé en ce que** le dispositif est un moteur électrique (16).

13. Palier de groupe selon la revendication 12, **caractérisé en ce que** le moteur électrique (16) peut être actionné au moyen du dispositif de commande.

14. Palier de groupe selon l'une quelconque des revendications 8 à 13, **caractérisé en ce que** le plateau descendeur (11) est pourvu d'une ouverture (18) pour réduire l'amortissement.

15. Palier de groupe selon l'une quelconque des revendications 1 à 14, **caractérisé en ce qu'**il est prévu un mode de ralenti.

16. Palier de groupe selon la revendication 15, **caractérisé en ce que**, dans le mode de ralenti, l'ouverture de passage (14) est fermée, et **en ce que** le dispositif de découplage présente une membrane (54) à jeu de membrane limité, le jeu de membrane étant libéré dans le mode de ralenti.

17. Palier de groupe selon la revendication 16, **caractérisé en ce qu'**afin de libérer le jeu de membrane, la limitation inférieure du jeu de membrane peut être abaissée.

18. Palier de groupe selon la revendication 17, **caractérisé en ce que** la tringle de manoeuvre (15) présente un élément d'actionnement au moyen duquel, lors de l'abaissement du plateau descendeur (11), la limitation inférieure du jeu de membrane peut être déplacée vers le bas à l'encontre d'une force de ressort.

19. Palier de groupe selon la revendication 18, **caractérisé en ce que** le fond (52b) de la cage de membrane (52) peut être déplacé vers le bas au moyen du plateau descendeur (11).
